# EUROPÄISCHE PATENTSCHRIFT

(11) **EP 2 436 623 B1**
(45) Veröffentlichungstag und Bekanntmachung des Hinweises auf die Patenterteilung: **13.03.2013**
(21) Anmeldenummer: 10013257.0
(22) Anmeldetag: 04.10.2010
(51) Int. Cl.: B65G 47/08, B65G 59/02, B65G 61/00, B65H 31/30

(54) **Verfahren und Vorrichtung zum Abfördern einer Stapelreihe**
Method and device for removing a row of stacks
Procédé et dispositif pour enlever une rangée de piles

(43) Veröffentlichungstag der Anmeldung: 04.04.2012
(73) Patentinhaber: Adolf Mohr Maschinenfabrik GmbH & Co. KG, 65719 Hofheim am Taunus (DE)
(72) Erfinder: Kaluza, Roland, 63225 Langen (DE); Berthold, Christian, 65529 Waldems (DE); Rudnick, Tobias, 64572 Worfelden (DE); Weiss, Michael, 65779 Kelkheim (DE)
(74) Vertreter: Quermann, Helmut

(56) Entgegenhaltungen:
- EP-A1- 1 155 984
- DE-A1- 3 603 484
- JP-A- 60 183 431

## Beschreibung

Die Erfindung betrifft ein Verfahren und eine Vorrichtung zum Abfördern einer Stapelreihe von einem aus parallel zueinander angeordneten Stapelreihen gebildeten, auf einem Tisch aufliegenden Gesamtstapel.

Wesentliches Anwendungsgebiet des Verfahrens und der Vorrichtung sind Gesamtstapel, die aus blattförmigen Gut gebildet sind und mittels einer Planschneidmaschine in diverse Stapelreihen getrennt sind. Die Stapelreihen werden durch parallel zueinander erfolgende Schnitte gebildet, wobei durch mehrfaches Schneiden des Gesamtstapels in einer ersten Richtung die diversen Stapelreihen gebildet werden. In aller Regel schließt sich ein weiteres Schneiden des Gesamtstapels in einer Richtung senkrecht zur ersten Schneidrichtung an, wobei der Gesamtstapel in Stapelreihen mit einer Vielzahl von Teilstapeln unterteilt wird.

Die Stapelreihen werden einzeln abgefördert und einer Weiterverarbeitungsstation zugeführt, bei der es sich insbesondere um eine Stanzvorrichtung handelt. Ist die jeweilige Stapelreihe in eine Vielzahl von Teilstapeln unterteilt, werden die Teilstapel der Weiterverarbeitungsstation zugeführt und dort einzeln weiterverarbeitet, insbesondere einzeln gestanzt. Beim Stanzvorgang werden insbesondere nicht rechteckige Etiketten erzeugt.

Ein Verfahren und eine Vorrichtung der eingangs genannten Art ist aus der EP 1 061 018 A1 bekannt. Das beschriebene Verfahren und die Vorrichtung zur Durchführung dieses Verfahrens ist geeignet, Stapelreihen unterschiedlicher Reihenbreite abzufördern. Bei dieser Vorrichtung finden ein Tisch mit einer flexiblen Aufnahme für den aus den diversen Stapelreihen gebildeten Gesamtstapel und eine zweiteilige, teilweise unterhalb der Auflage angeordnete Unterlage für die abzufördernde Stapelreihe Verwendung. Die Unterlage besteht aus zwei gelenkig miteinander verbundenen Segmenten, die entlang einer Kulissenführung in Förderrichtung der Stapelreihe verfahrbar ist, so dass dann, wenn der Gesamtstapel mit der abzufördernden Stapelreihe auf die Unterlage übergeschoben ist, diese Stapelreihe mittels der Unterlage abgefördert werden kann. Die Kulissenführung stellt hierbei sicher, dass die Unterlage auf das Niveau der Aufnahme für den Reststapel angehoben werden kann. Beim Verfahren der Unterlage mit der abzufördernden Stapelreihe gelangt diese gegen einen Anschlag. Die am Anschlag anliegende Stapelreihe wird anschließend mittels einer Ausschiebevorrichtung in Längsrichtung der Stapelreihe zu einer Weiterverarbeitungsstation, insbesondere einer Stanze ausgeschoben.

Insbesondere aufgrund der flexiblen Gestaltung der Aufnahme und der mehrteiligen, in einer Kulissenführung verfahrbaren Unterlage, die überdies unterhalb des Anschlags verfahrbar ist, ist diese bekannte Vorrichtung bzw. das mit der Vorrichtung durchführbare Verfahren baulich kompliziert bzw. funktionell aufwendig gestaltet.

Aufgabe der vorliegenden Erfindung ist es, ein aus funktionell einfach auszuführenden Verfahrensschritten gebildetes Verfahren zum Abfördern einer Stapelreihe von einem Gesamtstapel anzugeben, ferner eine Vorrichtung zur Durchführung des Verfahrens zu schaffen, die baulich besonders einfach gestaltet ist. Das Verfahren soll mit minimalem Steuerungsaufwand durchführbar sein bzw. die Vorrichtung nur geringe Steuerungsmittel benötigen.

Gelöst wird die Aufgabe durch ein Verfahren, das gemäß den Merkmalen des Patentanspruchs 1 ausgebildet ist, ferner durch eine Vorrichtung zur Durchführung des Verfahrens, die gemäß den Merkmalen des Patentanspruchs 9 ausgebildet ist.

Das erfindungsgemäße Verfahren geht davon aus, dass die Stapelreihe von einem aus parallel zueinander angeordneten Stapelreihen gebildeten, auf einem Tisch aufliegenden Gesamtstapel abzufördern ist. Wird vom Gesamtstapel eine Stapelreihe abgefördert, verbleibt ein Reststapel, der aus diversen parallel zueinander angeordneten Stapelreihen gebildet ist. Dieser Reststapel bildet für den nächsten Verfahrensschritt den Gesamtstapel, von dem wiederum eine Stapelreihe abzufördern ist und damit ein Reststapel verbleibt.

Zunächst wird der auf dem Tisch aufliegende Gesamtstapel gegen einen Anschlag geschoben. Hierbei liegt die abzufördernde Stapelreihe mit ihrer Längsseite am Anschlag an. Unter Breitseite der abzufördernden Stapelreihe wird somit die Erstreckung dieser Stapelreihe in Vorschubrichtung des Gesamtstapels auf dem Tisch verstanden. Bei Anlage der abzufördernden Stapelreihe am Anschlag liegt diese abzufördernde Stapelreihe mit der dem Anschlag zugewandten Seite zumindest teilweise auf einer flächigen Unterlage auf. Diese flächige Unterlage hat die Funktion einer Abziehplatte. Es wird bei am Anschlag anliegender und auf der Unterlage aufliegender, abzufördernden Stapelreihe diese gegen die Unterlage geklemmt. Anschließend werden Unterlage und Tisch relativ zueinander verfahren, bei auf der Unterlage geklemmter abzufördernder Stapelreihe. Hierbei wird der abzufördernde Stapel von dem auf dem Tisch verbleibenden Reststapel weg bewegt, und zwar senkrecht zur Trennebene von abzufördernder Stapelreihe und Reststapel, bis der abzufördernde Stapel nur auf der Unterlage aufliegt. Befindet sich die abzufördernder Stapelreihe in dieser Stellung, wird die Klemmung gelöst. Anschließend erfolgt das Ausschieben der abzufördernden Stapelreihe in deren Längserstreckung, insbesondere zu einer Weiterverarbeitungsstation. Bei dieser Weiterverarbeitungsstation handelt es sich insbesondere um eine Stanzvorrichtung.

Der Gesamtstapel ist insbesondere durch eine Vielzahl aufeinander gestapelter Blätter gebildet. Der Gesamtstapel wird mittels einer Planschneidmaschine in die Stapelreihen unterteilt, gegebenenfalls werden die erzeugten Stapelreihen durch eine Vielzahl weiterer, quer erfolgender Schnitte der Schneidmaschine in eine Vielzahl von Einzelstapeln unterteilt. Jede Stapelreihe kann somit entweder eine Einheit bilden oder durch mehrere in Längsrichtung der Stapelreihe hintereinander angeordnete Einzelstapel gebildet sein. Im ersten Fall wird die Einheit der Stapelreihe nach dem Lösen der Klemmung ausgeschoben, im letztgenannten Fall die aus den diversen Einzelstapeln gebildeten Stapelreihe ausgeschoben.

Unter dem Aspekt der relativen Verfahrbarkeit von Tisch und Unterlage zueinander, wird es als vorteilhaft angesehen, wenn der Tisch stationär ist und die Unterlage bewegt wird. Es ist somit nur erforderlich, die eine wesentlich geringere Masse aufweisende Unterlage, die das funktionelle Bauteil für das Abfördern der Stapelreihe darstellt, zu verfahren.

Insbesondere ist der Anschlag bezüglich der Unterlage und des Tisches so positioniert, dass dann, wenn der Gesamtstapel am Anschlag anliegt, die abzufördernde Stapelreihe teilweise auf der flächigen Unterlage und teilweise auf dem Tisch aufliegt. Dies ist deshalb ausreichend, weil es zum Abziehen der abzufördernden Stapelreihe vom Reststapel nur erforderlich ist, diese Stapelreihe unabhängig vom Tisch zu klemmen, demnach die Klemmung zur Unterlage herbeizuführen. Hierfür reicht es aus, wenn der abzufördernde Teilstapel nur teilweise auf der Unterlage aufliegt.

Vorzugsweise ist der Anschlag, gegen den der Gesamtstapel geschoben wird, stationär. Dies vereinfacht das Verfahren zum Abfördern der Stapelreihe, weil der Gesamtstapel immer bis zu einer definierten Position vorgeschoben wird, unabhängig davon, welche Abmessungen der Gesamtstapel bzw. die abzufördernde Stapelreihe aufweist. Bei stationärem Anschlag wird die Klemmung der abzufördernden Stapelreihe gegen die Unterlage, vorzugsweise immer im selben Abstand zum Anschlag vorgenommen, bezogen auf eine Abstandsposition der Klemmstelle senkrecht zur Anschlagfläche.

Zweckmäßig liegt die abzufördernde Stapelreihe zumindest über die Breite mindestens eines die Klemmung bewirkenden Klemmelements, bezogen auf die Breitenerstreckung der abzufördernden Stapelreihe, auf der Unterlage auf. Die Breite der Klemmung kann somit durchaus geringer sein als die Breite, mit der die abzufördernde Stapelreihe auf der Unterlage aufliegt.

Es wird als besonders vorteilhaft angesehen, wenn die Klemmung der Stapelreihe über die gesamte Länge der Stapelreihe erfolgt. Damit wird auch eine solche Stapelreihe sicher geklemmt, die durch mehrere in Längsrichtung der Stapelreihe hintereinander angeordnete Einzelstapel gebildet ist.

Die den Gesamtstapel bildenden Stapelreihen können identische oder unterschiedliche Längen aufweisen. Entsprechendes gilt für die Breite der den Gesamtstapel bildenden Stapelreihen. Die Breite der Stapelreihen kann identisch oder unterschiedlich sein.

Die erfindungsgemäße Vorrichtung zur Durchführung des erfindungsgemäßen Verfahrens weist einen Tisch auf, der im Bereich seines der Unterlage zugewandten Endes eine geringe vertikale Erstreckung aufweist. Unmittelbar unterhalb dieses Tischendes ist die horizontal verfahrbare Unterlage, die die Funktion einer Abziehplatte aufweist, angeordnet. In der unter den Tisch verfahrenden Endstellung der Unterlage steht diese teilweise über den Tisch vor, so dass dieser Bereich die abzufördernde Stapelreihe zumindest teilweise aufnimmt. Oberhalb des über das Tischende vorstehenden Bereichs der Unterlage ist eine Klemmvorrichtung zum Klemmen der verfahrbaren Stapelreihe gegen die Unterlage angeordnet. Mittels Stellmitteln werden Unterlage und Klemmvorrichtung gemeinsam vom Tisch weg verfahren. Eine Ausschiebevorrichtung, die bei vom Tisch weg verfahrener Stellung von Unterlage und Klemmvorrichtung neben der Klemmvorrichtung angeordnet ist, dient dem seitlichen Ausschieben bzw. seitlichen Abfördern der Stapelreihe, somit dem Abfördern der Stapelreihe in deren Längserstreckung. Diese Ausschieberichtung ist somit benachbart einer Stirnseite der verfahrbaren Stapelreihe angeordnet.

Baulich besonders einfach ist die Anordnung zum Abziehen der abzufördernden Stapelreihe vom Reststapel gestaltet, wenn in einer mittels der Stellmittel horizontal verfahrbaren Einrichtung die Unterlage, die Klemmvorrichtung und der Anschlag gelagert ist.

Der Tisch stellt insbesondere einen Puffer zwischen einer Planschneidmaschine und einer Weiterverarbeitungsstation, insbesondere einer Stanzvorrichtung dar. Insbesondere unter diesem Aspekt wird es als besonders vorteilhaft angesehen, wenn im Tisch eine Überschiebevorrichtung zum Überschieben des Gesamtstapels auf den Tisch verfahrbar gelagert ist. Diese Überschiebevorrichtung schiebt, insbesondere im Anschluss an die Planschneidmaschine, entweder den Gesamtstapel insgesamt auf den Tisch, oder nacheinander einzelne Stapelreihen auf den Tisch und bildet durch mehrere Überschiebevorgänge den Gesamtstapel. Hierbei können die einzelnen Stapelreihen durch Teilstapel gebildet sein. Vorzugsweise ist im Tisch ferner eine Vorschubeinrichtung zum Verschieben des Gesamtstapels auf dem Tisch gegen den Anschlag verfahrbar gelagert. Insbesondere dient diese Vorschubeinrichtung dem weiteren Vorschieben des Gesamtstapels, der mittels der Überschiebevorrichtung auf den Tisch übergeschoben worden ist.

Baulich stellt sich die erfindungsgemäße Vorrichtung besonders einfach dar, wenn die Unterlage, die Klemmvorrichtung und den Anschlag aufweisende Einrichtung und/oder die Vorschubeinrichtung und/oder die Überschiebevorrichtung im Tisch verfahrbar gelagert ist bzw. sind.

Weitere Merkmale der Erfindung sind in den Unteransprüchen, der Beschreibung der Zeichnung und der Zeichnung selbst dargestellt, wobei bemerkt wird, dass alle Einzelmerkmale und alle Kombinationen von Einzelmerkmalen weitere erfinderische Ausgestaltungen darstellen.

Das erfindungsgemäße Verfahren und die Vorrichtung zur Durchführung dieses Verfahrens ist unter Hinweis auf die nachfolgenden Figuren näher erläutert, ohne auf das veranschaulichte Ausführungsbeispiel beschränkt zu sein. Es zeigt:
- Fig. 1: eine Seitenansicht der erfindungsgemäßen Vorrichtung zur Durchführung des erfindungsgemäßen Verfahrens,
- Fig. 2: eine Draufsicht der in Fig. 1 gezeigten Vorrichtung,
- Fig. 3 bis 6: in einer vergrößerten Seitenansicht gemäß Fig. 1, abfolgende Verfahrensschritte des erfindungsgemäßen Verfahrens, bis zum Ver- fahrensschritt des Ausschiebens einer vom Reststapel abgeförderten Stapelreihe,
- Fig. 7: in einer vergrößerten Draufsicht der Vorrichtung gemäß Fig. 2 den Verfahrensschritt des Ausschiebens der vom Reststapel abgeförderten Stapelreihe.

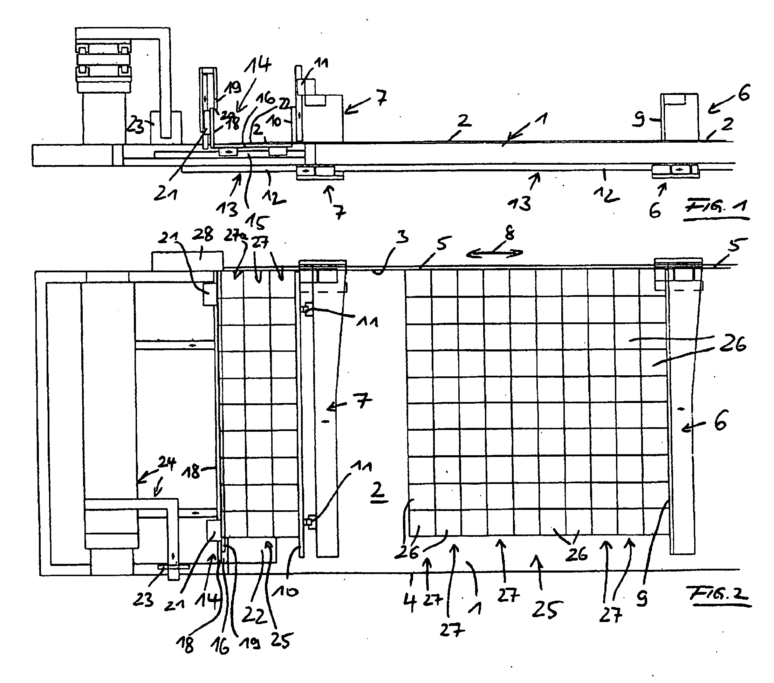

In den Fig. 1 und 2 ist die erfindungsgemäße Vorrichtung grundsätzlich veranschaulicht und es bezieht sich die nachfolgenden Beschreibung auf diese Figuren:

Ein Tisch 1 weist eine horizontale Aufnahmefläche 2 auf. Seitlich ist der Tisch 1 durch zwei parallele Seiten 3 und 4 begrenzt. Im Bereich der Seite 3 ist mit dem Tisch 1 ein seitliches Anlegelineal 5 verbunden, das senkrecht über die Aufnahmefläche 2 hinaussteht. Im Bereich der Seite 3 des Tisches 1 ist in diesem eine Überschiebevorrichtung 6 und bezüglich dieser weiter vorn eine Vorschiebevorrichtung 7 gelagert. Beide Vorrichtungen 6 und 7 sind in Richtung des Doppelpfeiles 8 in Längserstreckung des Tisches 1 hin und her verfahrbar. Die Überschiebevorrichtung 6 ist auf ihrer Vorderseite mit einem senkrecht zum Tisch angeordneten Lineal 9 versehen, das unten mit minimalem Spalt zur Aufnahmefläche 2 des Tisches 1 angeordnet ist. Die Vorschiebevorrichtung 7 nimmt ein senkrecht zur Aufnahmefläche 2 des Tisches 1 angeordnetes Lineal 10 auf, das in vertikalen Führungen 11 gelagert ist und mittels nicht näher veranschaulichter Stellmittel senkrecht zur Aufnahmefläche 2 des Tisches 1 hebund senkbar ist, in eine abgesenkte Position, in der es mit minimalem Abstand zur Aufnahmefläche 2 angeordnet ist und eine vollständig angehobene Position, in der es höher angeordnet ist, als die maximale Höhe eines vom Tisch 1 aufzunehmenden Stapels.

Die Vorrichtungen 6 und 7 sind in einer gemeinsamen Führung 12 eines Tischgestells 13 gelagert, die im Bereich dieser Seite 3 des Tisches 1 angeordnet ist. Das Verfahren der Vorrichtungen 6 und 7 erfolgt über der jeweiligen Vorrichtung zugeordnete Stellmittel, die nicht veranschaulicht sind. Die beiden Lineale 9 und 10 sind plattenförmig ausgebildet und erstrecken sich vom seitlichen Anlegelineal 5 bis nahezu zur Seite 4 des Tisches 1.

Im Bereich des vorderen Endes des Tisches 1 ist, im Bereich der beiden Seiten 3 und 4 des Tisches 1, eine Einrichtung 14 in Führungen 15 verschieblich gelagert. Diese Führungen 15 sind im Tischgestell 13 gelagert. Die Verstellung der Einrichtung 14 erfolgt über nicht näher veranschaulichte Stellmittel. Verfahrbar ist die Einrichtung 14 in Verfahrrichtung der Vorrichtungen 6 bzw. 7. Die Einrichtung 14 weist eine plattenförmige Unterlage 16 mit horizontal angeordneter Aufnahmefläche 17, ferner, im Bereich des vorderen Endes der Unterlage 16, ein mit dieser fest verbundenes Anschlaglineal 18, das sich senkrecht zur Aufnahmefläche 17 oberhalb der Unterlage 16 erstreckt, sowie eine im Anschlaglineal 18 gelagerte Klemmvorrichtung 19 auf. Diese Klemmvorrichtung 19 und auch das Anschlaglineal 18 erstrecken sich über dieselbe Länge, wie die Lineale 9 und 10, ausgehend von dem seitlichen Anlegelineal 5. Die Klemmvorrichtung 19 ist als vertikal angeordnete Platte ausgebildet, die heb- und senkbar ist und mittels ihrer unteren Stirnfläche 20 dem Klemmen dient. Die Klemmvorrichtung 19 ist über vertikale Führungen 21 im Anschlaglineal 18 auf dessen Vorderseite verfahrbar gelagert, wobei das Stellmittel zum Verfahren der Klemmvorrichtung 19 relativ zum Anschlaglineal 18 nicht veranschaulicht sind.

Der Tisch 1 weist im Bereich seines vorderen Endes einen Tischabschnitt 22 auf, der relativ dünnwandig ist, somit eine geringe vertikale Erstreckung aufweist. Dieser Tischabschnitt 22 läuft im Bereich seines vorderen Endes keilförmig zu, mit einem geringen Keilwinkel. Auf einem Niveau unmittelbar unterhalb dieses Tischendes bzw. dieses Tischabschnitts 22 ist die horizontal verfahrbare Unterlage 16, die die Funktion einer Abziehplatte aufweist, angeordnet. Die Unterlage 16 steht in ihrer in den Fig. 1 und 2 veranschaulichten, unter den Tischabschnitt 22 verfahrenen Endstellung teilweise, konkret nur geringfügig über den Tischabschnitt 22 vor. Oberhalb dieses über den Tischabschnitt 22 vorstehenden Bereiches der Unterlage 16 ist die Klemmvorrichtung 19 angeordnet.

Bezogen auf die nach vorne Verfahrrichtung der Einrichtung 16 ist in der in den Fig. 1 und 2 gezeigten Endstellung der Einrichtung 14 vor dieser eine Ausschiebevorrichtung 23 angeordnet, und zwar im Bereich der Seite 4 des Tisches 1, außerhalb des Verfahrbereiches des Anschlaglineals 18. In der anderen nach vorne gefahrenen Endstellung der Einrichtung 14 ist dieses Anschlaglineal 18 soweit nach vorne gefahren, dass die Ausschiebevorrichtung 23, die im Wesentlichen als vertikal orientierte Ausschiebeplatte ausgebildet ist, in geringem Abstand zum Anschlaglineal 18 hinter diesem in Querrichtung des Tisches 1, somit in Richtung der Seite 3 verfahren kann. Die Ausschiebevorrichtung 23 ist in einem Gestell 24 geführt und mittels nicht näher dargestellter Stellmittel in Querrichtung des Tisches 1 verfahrbar.

Die anhand der Fig. 1 und 2 beschriebene Vorrichtung nimmt in einer Ausgangssituation gemäß Fig. 2 einen Gesamtstapel 25 auf, der durch Längsschneiden und anschließendes Querschneiden mittels einer Planschneidmaschine in eine Vielzahl einzelner Teilstapel 26 unterteilt ist. Der Gesamtstapel 25 ist durch eine Vielzahl aufeinanderliegender Blätter, insbesondere Lagen aus Papier gebildet. Er weist eine quadratische Grundfläche auf. Im konkreten Ausführungsbeispiel gemäß Fig. 2 weist der Gesamtstapel 25 einhundert Teilstapel 26 auf. Beim Schneiden mittels der Schneidmaschine in der einen Richtung werden zunächst zehn Stapelreihen gebildet, beim anschließenden erneuten Schneiden des Gesamtstapels 25, in der Richtung senkrecht hierzu, werden zehn Stapelreihen 27 gebildet, wobei die jeweilige Stapelreihe 27 in diesem Fall aus zehn Teilstapeln 26 besteht.

Wie der Darstellung der Fig. 2 zu entnehmen ist, ist mittels der Überschiebevorrichtung 6 von der nicht veranschaulichten Planschneidmaschine ein Gesamtstapel 25 mit den einhundert Teilstapeln 26 übergeschoben worden. Weiter links davon ist ein bereits teilweise abgearbeiteter Gesamtstapel 25 veranschaulicht, der nur noch drei Stapelreihen 27 aufweist. Dieser Gesamtstapel 25 wird mittels der Vorschiebevorrichtung 7 vorgeschoben. Sind die drei Stapelreihen 27 dieses Gesamtstapels 25 abgearbeitet, wird das Lineal 10 angehoben und es fährt die Vorschiebevorrichtung 7 in die Position hinter dem großen Gesamtstapel 25, nachdem zuvor die Überschiebevorrichtung 6 aus der Position hinter diesem großen Gesamtstapel 25 zurückgefahren worden ist. Es kann dann die Vorschiebevorrichtung 7 den großen Gesamtstapel 25 vorschieben, damit die zehn Stapelreihen 27 abgearbeitet werden können.

Das Abarbeiten der jeweiligen Stapelreihe 27 geschieht, bezogen auf das Beispiel mit dem kleinen Gesamtstapel 25 mit den drei Stapelreihen 27 wie folgt und ist anhand der Darstellung der Fig. 1 bis 7 veranschaulicht:

Aus der Darstellung der Fig. 2 ist ersichtlich, dass durch Vorschieben der Vorschiebevorrichtung 7, bei Anlage des Lineals 10 an dem Gesamtstapel 25, der die drei Stapelreihen 27 aufweist, die vordere Stapelreihe 27 gegen das Anschlaglineal 18 der Einrichtung 14 geschoben wird. Hierbei liegt diese vordere Stapelreihe, der Einfachheit halber als abzufördernde Stapelreihe 27a bezeichnet, über eine geringe Breite auf der Unterlage 16 und eine große Breite auf dem Tischabschnitt 22 auf.

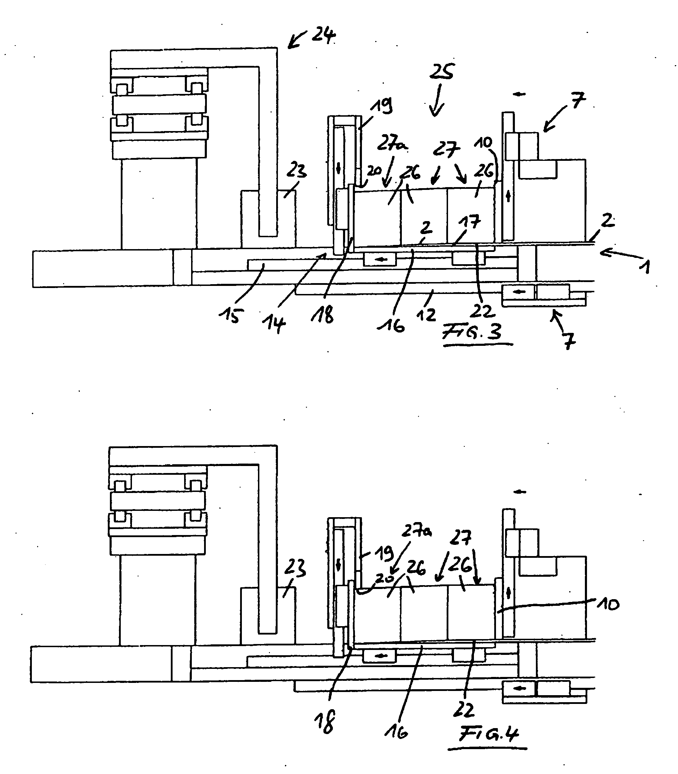

Ausgehend von dieser Situation, die auch in der Seitenansicht gemäß Fig. 3 veranschaulicht ist, wird die Klemmvorrichtung 19 benachbart dem Anschlaglineal 18 auf die abzufördernde Stapelreihe 27a abgesenkt und klemmt somit diese Stapelreihe 27a benachbart dem Anschlaglineal 18 zwischen der Klemmvorrichtung 19 und der Unterlage 16. Dieser Zustand ist in Fig. 4 veranschaulicht.

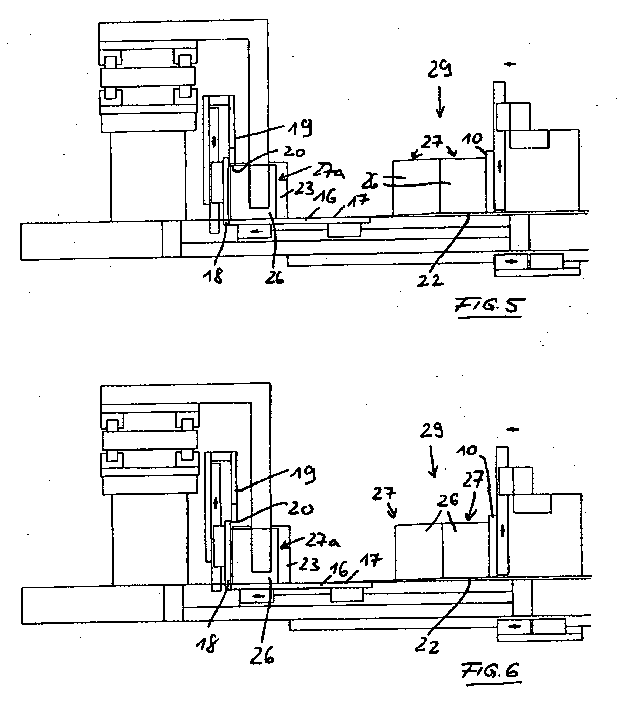

Anschließend wird die Einrichtung 14, somit die Anordnung von Unterlage 16, Anschlaglineal 18 und Klemmvorrichtung 19 nach vorne verfahren, so dass die über die ganze Länge mittels der Klemmvorrichtung 19 geklemmte Stapelreihe 27a vom Tischabschnitt 22 abgezogen wird und damit vollständig auf der Unterlage 16 aufliegt. Auf dem Tischabschnitt 22 verbleibt der aus zwei Stapelreihen 27 gebildete Reststapel 29. Dieser Zustand ist in Fig. 5 gezeigt.

Anschließend wird die Klemmung durch Anheben der Klemmvorrichtung 19 von der abzufördernden Stapelreihe 27a aufgehoben. Dieser Zustand ist in Fig. 6 veranschaulicht.

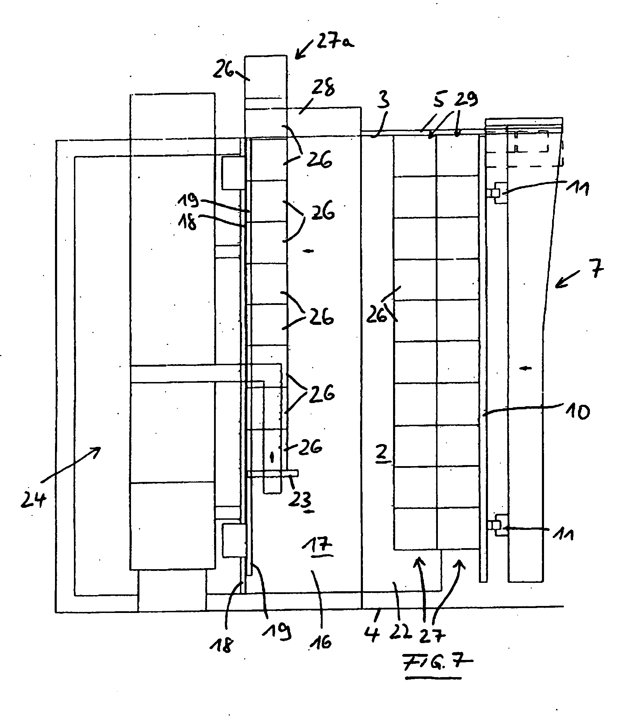

Schließlich wird durch Verfahren der Ausschiebevorrichtung 23 in Querrichtung des Tisches 1 die abzufördernde Stapelreihe 27a über ein seitlich der Unterlage 16 angeordnetes Überleitblech 28 zu einer Weiterverarbeitungsstation, bei der es sich insbesondere um eine Stanzvorrichtung handelt, ausgeschoben. Fig. 7 zeigt den Zustand bei teilweise ausgeschobener, abzufördernder Stapelreihe 27a.

Nach dem Abfördern der Stapelreihe 27a wird die Ausschiebevorrichtung 23 wieder in deren Ausgangsstellung benachbart der Seite 4 zurückverfahren. Die Einrichtung 14 wird gleichfalls wieder zurückverfahren, d. h. nach hinten verfahren, in die in den Fig. 1 bis 3 gezeigte Ausgangsstellung. Es schließt sich dann der beschriebene Vorgang an, zunächst mit dem Vorschieben des Reststapels 29 gegen das Anschlaglineal 18.

## Patentansprüche

1. Verfahren zum Abfördern einer Stapelreihe (27a) von einem aus parallel zueinander angeordneten Stapelreihen (27a, 27, 27) gebildeten, auf einem Tisch (1) aufliegenden Gesamtstapel (25), mit folgenden Merkmalen:
- Schieben des auf dem Tisch (1) aufliegenden Gesamtstapels (25) gegen einen Anschlag (18), wobei die abzufördernde Stapelreihe (27a) mit ihrer Längsseite am Anschlag (18) anliegt, sowie mit der dem Anschlag (18) zugewandten Seite zumindest teilweise auf einer flächigen Unterlage (16) aufliegt,
- Klemmen der abzufördernden Stapelreihe (27a) gegen die Unterlage (16),
- Verfahren von Unterlage (16) und Tisch (1) relativ zueinander, bei auf der Unterlage (16) geklemmter, abzufordernder Stapelreihe (27a), wobei die abzufördernde Stapelreihe (27a) vom auf den Tisch (1) verbleibenden Reststapel (29) wegbewegt wird, senkrecht zur Trennebene von abzufördernder Stapelreihe (27a) und Reststapel (29),
- Lösen der Klemmung,
- Ausschieben der abzufördernden Stapelreihe (27a) in deren Längserstreckung.

2. Verfahren nach Anspruch 1, wobei der Tisch (1) stationär ist und die Unterlage (16) bewegt wird.

3. Verfahren nach Anspruch 1 oder 2, wobei die abzufordernde Stapelreihe (27a) teilweise auf der flächigen Unterlage (16) und teilweise auf dem Tisch (1) aufliegt.

4. Verfahren nach einem der Ansprüche 1 bis 3, wobei der Gesamtstapel (25) gegen einen stationären Anschlag (18) geschoben wird.

5. Verfahren nach einem der Ansprüche 1 bis 4, wobei die abzufördernde Stapelreihe (27a) zumindest über die Breite mindestens eines die Klemmung bewirkenden Klemmelements (19), bezogen auf die Breitenerstreckung der abzufördernden Stapelreihe (27a), auf der Unterlage (16) aufliegt.

6. Verfahren nach einem der Ansprüche 1 bis 5, wobei jede Stapelreihe (27, 27a) durch mehrere in Längsrichtung der Stapelreihe (27, 27a) hintereinander angeordnete Einzelstapel (26) gebildet ist.

7. Verfahren nach einem der Ansprüche 1 bis 6, wobei die Klemmung der abzufördernden Stapelreihe (27a) über die gesamte Länge dieser Stapelreihe erfolgt.

8. Verfahren nach einem der Ansprüche 1 bis 7, wobei die abzufordernde Stapelreihe (27a) in eine Weiterverarbeitungsstation, insbesondere eine Stanzvorrichtung ausgeschoben wird.

9. Vorrichtung zur Durchführung des Verfahrens nach einem der Ansprüche 1 bis 8, wobei ein Tisch (1) im Bereich eines - Endes (22) eine relativ geringe vertikale Erstreckung aufweist, sowie unmittelbar unterhalb dieses Tischendes (22)- eine horizontal verfahrbare Unterlage (16) angeordnet ist, die in der unter den Tisch (1) verfahrenen Endstellung teilweise über den Tisch (1) vorsteht, und oberhalb des vorstehenden Bereiches eine Klemmvorrichtung (19) zum Klemmen der abzufördernden Stapelreihe (27a) gegen die Unterlage (16) angeordnet ist, wobei Stellmittel zum gemeinsamen Verfahren von Unterlage (16) und Klemmvorrichtung (19) vom Tisch (1) weg vorgesehen sind, sowie mit einer Ausschiebevorrichtung (23), die bei vom Tisch (1) weg verfahrener Stellung von Unterlage (16) und Klemmvorrichtung (19) neben der Klemmvorrichtung (19) angeordnet ist.

10. Vorrichtung nach Anspruch 9, wobei in einer mittels der Stellmittel horizontal verfahrbaren Einrichtung (14) die Unterlage (16), die Klemmvorrichtung (19) und der Anschlag (18) gelagert sind.

11. Vorrichtung nach Anspruch 9 oder 10, wobei im Tisch (1) eine Vorschiebevorrichtung (7) zum Vorschieben des Gesamtstapels (25) auf dem Tisch (1), gegen den Anschlag (18), verfahrbar gelagert ist.

12. Vorrichtung nach Anspruch 11, wobei im Tisch (1) eine Überschiebevorrichtung (6) zum Überschieben des Gesamtstapels (25) auf den Tisch (1) verfahrbar gelagert ist.

13. Vorrichtung nach einem der Ansprüche 10 bis 12, wobei die Einrichtung (14) und/oder die Vorschiebevorrichtung (7) und/oder die Überschiebevorrichtung (6) im Tisch (1) verfahrbar gelagert sind.

## Claims

1. Method for removing a stack row (27a) from an overall stack (25) which is formed from stack rows (27a, 27, 27) arranged parallel to one another and rests on a table (1), having the following features of:
- pushing the overall stack (25) resting on the table (1) against a stop (18), wherein the stack row (27a) to be removed butts against the stop (18) by way of its long side, and also rests at least partially on a flat base (16) by way of the side facing the stop (18),
- clamping the stack row (27a) to be removed to the base (16),
- moving the base (16) and the table (1) in relation to one another, with the stack row (27a) to be removed clamped on the base (16), wherein the stack row (27a) to be removed is moved away from the residual stack (29) remaining on the table (1), perpendicularly to the parting plane of the stack row (27a) to be removed and the residual stack (29),
- releasing the clamping,
- pushing out the stack row (27a) to be removed in the longitudinal extent thereof.

2. Method according to Claim 1, wherein the table (1) is stationary and the base (16) is moved.

3. Method according to Claim 1 or 2, wherein the stack row (27a) to be removed rests partially on the flat base (16) and partially on the table (1).

4. Method according to one of Claims 1 to 3, wherein the overall stack (25) is pushed against a stationary stop (18).

5. Method according to one of Claims 1 to 4, wherein the stack row (27a) to be removed rests on the base (16) at least over the width of at least one clamping element (19) that effects the clamping, with respect to the widthwise extent of the stack row (27a) to be removed.

6. Method according to one of Claims 1 to 5, wherein each stack row (27, 27a) is formed by a plurality of individual stacks (26) arranged in succession in the longitudinal direction of the stack row (27, 27a).

7. Method according to one of Claims 1 to 6, wherein the clamping of the stack row (27a) to be removed takes place along the entire length of said stack row.

8. Method according to one of Claims 1 to 7, wherein the stack row (27a) to be removed is pushed out into a further-processing station, in particular a stamping apparatus.

9. Apparatus for carrying out the method according to one of Claims 1 to 8, wherein a table (1) has a relatively small vertical extent in the region of one end (22), and also a horizontally movable base (16) is arranged directly beneath this table end (22), said base (16) projecting partially beyond the table (1) in the end position moved under the table (1), and above the projecting region there is arranged a clamping apparatus (19) for clamping the stack row (27a) to be removed to the base (16), wherein there are provided actuating means for jointly moving the base (16) and the clamping apparatus (19) away from the table (1), and also having a pushing-out apparatus (23) which, in the position of the base (16) and clamping apparatus (19) moved away from the table (1), is arranged next to the clamping apparatus (19).

10. Apparatus according to Claim 9, wherein the base (16), the clamping apparatus (19) and the stop (18) are mounted in a device (14) which is horizontally movable by means of the actuating means.

11. Apparatus according to Claim 9 or 10, wherein an advancing apparatus (7) for advancing the overall stack (25) on the table (1) against the stop (18) is movably mounted in the table (1).

12. Apparatus according to Claim 11, wherein a transfer apparatus (6) for transferring the overall stack (25) onto the table (1) is movably mounted in the table (1).

13. Apparatus according to one of Claims 10 to 12, wherein the device (14) and/or the advancing apparatus (7) and/or the transfer apparatus (6) are movably mounted in the table (1).

## Revendications

1. Procédé pour enlever une rangée de piles (27a) d'une pile complète (25) formée de rangées de piles (27a, 27, 27) disposées parallèlement les unes aux autres, reposant sur une table (1), comprenant les caractéristiques suivantes :
- poussée de la pile complète (25) reposant sur la table (1) contre une butée (18), la rangée de piles à enlever (27a) s'appliquant avec son côté longitudinal contre la butée (18), et reposant avec le côté tourné vers la butée (18) au moins en partie sur un support plan (16),
- serrage de la rangée de piles à enlever (27a) contre le support (16),
- déplacement du support (16) et de la table (1) l'un par rapport à l'autre, lorsque la rangée de piles à enlever (27a) est serrée sur le support (16), la rangée de piles à enlever (27a) étant retirée de la pile restante (29) demeurant sur la table (1), perpendiculaire au plan de séparation de la rangée de piles à enlever (27a) et de la pile restante (29),
- desserrage du serrage,
- évacuation de la rangée de piles à enlever (27a) suivant son étendue longitudinale.

2. Procédé selon la revendication 1, dans lequel la table (1) est stationnaire et le support (16) est déplacé.

3. Procédé selon la revendication 1 ou 2, dans lequel la rangée de piles à enlever (27a) repose en partie sur le support plan (16) et en partie sur la table (1).

4. Procédé selon l'une quelconque des revendications 1 à 3, dans lequel la pile complète (25) est poussée contre une butée stationnaire (18).

5. Procédé selon l'une quelconque des revendications 1 à 4, dans lequel la rangée de piles à enlever (27a) repose sur le support (16) au moins sur la largeur d'au moins un élément de serrage (19) provoquant le serrage, par rapport à l'étendue en largeur de la rangée de piles à enlever (27a).

6. Procédé selon l'une quelconque des revendications 1 à 5, dans lequel chaque rangée de piles (27, 27a) est formée par plusieurs piles individuelles (26) disposées les une derrière les autres dans la direction longitudinale de la rangée de piles (27, 27a).

7. Procédé selon l'une quelconque des revendications 1 à 6, dans lequel le serrage de la rangée de piles (27a) à enlever s'effectue sur toute la longueur de cette rangée de piles.

8. Procédé selon l'une quelconque des revendications 1 à 7, dans lequel la rangée de piles à enlever (27a) est évacuée dans un poste de traitement ultérieur, notamment un dispositif d'estampage.

9. Dispositif pour mettre en oeuvre le procédé selon l'une quelconque des revendications 1 à 8, dans lequel une table (1) présente dans la région d'une extrémité (22), une étendue verticale relativement faible, et immédiatement en dessous de cette extrémité de table (22) est disposé un support (16) déplaçable horizontalement, lequel dépasse en partie au-delà de la table (1) dans la position d'extrémité déplacée sous la table (1), et au-dessus de la région qui dépasse un dispositif de serrage (19) pour serrer la rangée de piles à enlever (27a) étant disposé sous le support (16), des moyens de réglage pour déplacer conjointement le support (16) et le dispositif de serrage (19) à l'écart de la table (1) étant prévus, et comprenant un dispositif d'évacuation (23) qui dans la position du support (16) et du dispositif de serrage (19) écartée de la table (1), est disposé à côté du dispositif de serrage (19).

10. Dispositif selon la revendication 9, dans lequel le support (16), le dispositif de serrage (19) et la butée (18) sont supportés dans un dispositif (14) déplaçable horizontalement à l'aide des moyens de réglage.

11. Dispositif selon la revendication 9 ou 10, dans lequel un dispositif d'avance (7) pour faire avancer la pile complète (25) sur la table (1) contre la butée (18) est monté de manière déplaçable dans la table (1).

12. Dispositif selon la revendication 11, dans lequel un dispositif de poussée (6) pour pousser la pile complète (25) sur la table (1) est monté de manière déplaçable dans la table (1).

13. Dispositif selon l'une quelconque des revendications 10 à 12, dans lequel le dispositif (14) et/ou le dispositif d'avance (7) et/ou le dispositif de poussée (6) sont montés de manière déplaçable dans la table (1).
